(19) Europäisches Patentamt
European Patent Office
Office européen des brevets

(11) **EP 2 402 815 A1**

(12) **EUROPEAN PATENT APPLICATION**

(43) Date of publication:
**04.01.2012 Bulletin 2012/01**

(51) Int Cl.:
**G02C 7/02** (2006.01)

(21) Application number: **11171459.8**

(22) Date of filing: **27.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2010 JP 2010147239**

(71) Applicant: **Seiko Epson Corporation**
**Tokyo 163-0811 (JP)**

(72) Inventors:
• **Suzuki, Yohei**
**Nagano, 392-8502 (JP)**
• **Kaga, Tadashi**
**Nagano, 392-8502 (JP)**

(74) Representative: **HOFFMANN EITLE**
**Patent- und Rechtsanwälte**
**Arabellastraße 4**
**81925 München (DE)**

(54) **Progressive power eyeglass lens and design method thereof**

(57) A progressive power eyeglass lens includes an object side surface that includes a first progressive surface, an eyeball side surface that includes a second progressive surface, and a pair of points that is passed by a light beam passing through a rotation center of an eyeball of an eyeglasses wearer, the pair of points including a first point that exists on a principal meridian on the eyeball side surface between a progressive start point to a progressive end point, and a second point that exists on a principal meridian on the object side surface.

FIG. 1A

**Description**

<u>BACKGROUND</u>

1. Technical Field

The present invention relates to a progressive power eyeglass lens having progressive surfaces on both of a surface at an object side and a surface at an eyeball side of an eyeglasses wearer and a design method thereof.

2. Related Art

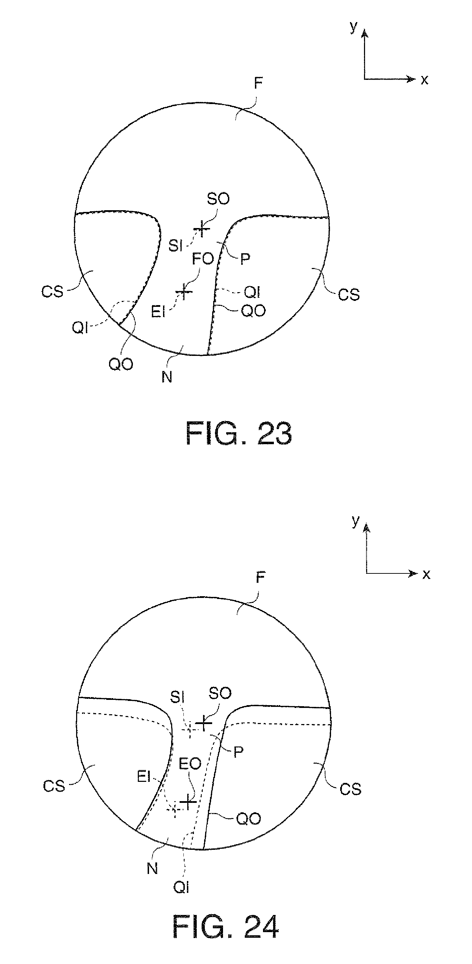

Eyeglass lenses include progressive power eyeglass lenses in addition to single focus eyeglass lenses. As the progressive power eyeglass lens, there is an aspherical lens having a distance portion with refractive power (power) for distance vision, a near portion with refractive power for near vision, a progressive portion provided between the distance portion and the near portion, and intermediate lateral portions provided on both sides of the progressive portion. In the progressive portion provided between the distance portion and the near portion, a part between a progressive start point and a progressive end point on a principal meridian is a progressive surface on which addition continuously changes.
The principal meridian is a line on the progressive surface and shows a location that a visual line passes when an eyeglasses wearer views an object located from the front upside toward the front downside. Between the progressive start point and the progressive end point of a general progressive surface, astigmatism takes the local minimum value relative to the astigmatism in the location shifted in the horizontal direction at wearing.
In the progressive power eyeglass lens, in related art, the progressive surface is formed on one of the surface at the object side (outer surface) and the surface at the eyeball side (inner surface) of the eyeglasses wearer, and, for improvement of optical performance, there are progressive power eyeglass lenses having progressive surfaces on both the object side surface and the eyeball side surface (Patent Document 1 (Japanese Patent No. 3800629), Patent Document 2 (Japanese Patent No. 4239519), and Patent Document 3 (JP-A-2000-155294)).
Patent Document 1 only discloses that the progressive surfaces are formed on both the object side surface and the eyeball side surface, but does not disclose how the progressive start points and the progressive end points defining the progressive surfaces etc. are provided on the progressive surfaces on both sides. Accordingly, it is considered that the progressive start point S and the progressive end point E are located in positions having the same x, y-coordinates on the object side surface and the eyeball side surface on the xy-coordinate plane with the optical axis as the z-axis and orthogonal to the z-axis. Also, in the case of a lens having a prism, it is considered that the points are located in positions having the same x, y coordinates on the object side surface and the eyeball side surface on the xy-coordinate plane with a straight line perpendicular to the object side surface or the eyeball side surface at the design reference point as the z-axis and orthogonal to the z-axis.
As shown in Fig. 23, in the progressive power eyeglass lens of Patent Document 1, the progressive start point SO and the progressive end point EO defining the progressive surface on the object side surface are in the same positions as the progressive start point SI and the progressive end point EI defining the progressive surface on the eyeball side surface on the xy-coordinate plane, and thus, in design, regions that section the distance portion F, the progressive portion P, the near portion N, and the intermediate lateral portions CS are in the same positions on the object side surface and the eyeball side surface, and boundary lines QO, QI that section the distance portion F, the progressive portion P, the near portion N, and the intermediate lateral portions CS superimpose on xy-coordinates. Note that, in Fig. 23, for clearly showing the positional relationship between both sides, the parts between the progressive start point SO and the progressive start point SI, the parts between the progressive end point EO and the progressive end point EI, and the parts between the boundary line QO and the boundary line QI are slightly shifted in illustration.
Further, as shown in Fig. 24, it is considered that the progressive start points SO, SI and the progressive end points EO, EI are unintentionally shifted and set on the xy-coordinate plane. In response to the shifts, the regions of the distance portion F, the progressive portion P, the near portion N, and the intermediate lateral portions CS are shifted between both sides.
Patent Document 2 discloses a configuration in which the distance portion center point and the near portion center point on the eyeball side surface are provided in positions near a fitting point in consideration of the tilt of light beam with respect to the distance portion center point and the near portion center point on the opposed object side surface.
Patent Document 3 discloses a configuration in which astigmatism regions on both sides are shifted and the positions of the optical centers are intentionally shifted.
Regarding the related art example in Patent Document 1, in the progressive power eyeglass lens, a light beam from an object enters the object side surface, is refracted within the lens toward the inner side of the lens, then, enters an eye from the eyeball side surface, and thus, the meridian of the object side surface does not coincide with the meridian of the eyeball side surface in visual observation. Accordingly, as in the related art example, if the progressive start points and the progressive end points respectively provided on both sides of the progressive power eyeglass lens are the same in xy-coordinates, a problem occurs in design of the principal meridians and inconvenience that a clear vision area becomes smaller is caused.

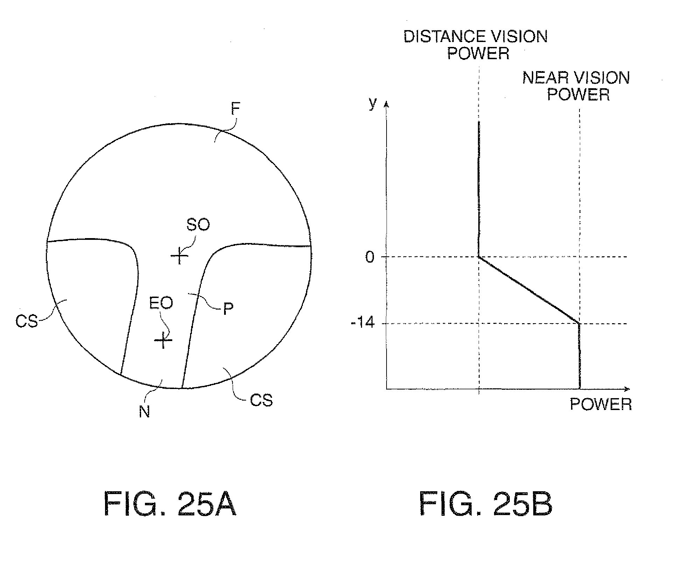

That is, in Fig. 23, the progressive start points SO, SI and the progressive end points EO, EI defining the progressive surface are in the same positions in xy-coordinates, and the sections of the regions of the distance portion F, the progressive portion P, the near portion N, and the intermediate lateral portions CS are also the same in xy-coordinates. However, the position in which the light beam and the eyeball side surface intersect is shifted in xy-coordinates to the inner side of the lens relative to the position in which the light beam and the object side surface intersect, and, as shown in Fig. 25A, the clear vision areas of the progressive portion P and the near portion N in the x direction become smaller in the performance at wearing. Further, as shown in Fig. 25B, the length between the progressive start point and the progressive end point in specifications is "14 mm" (negatively noted in the drawing), however, the actual progressive length is longer than that of the progressive power eyeglass lens using only the object side surface as the progressive surface.

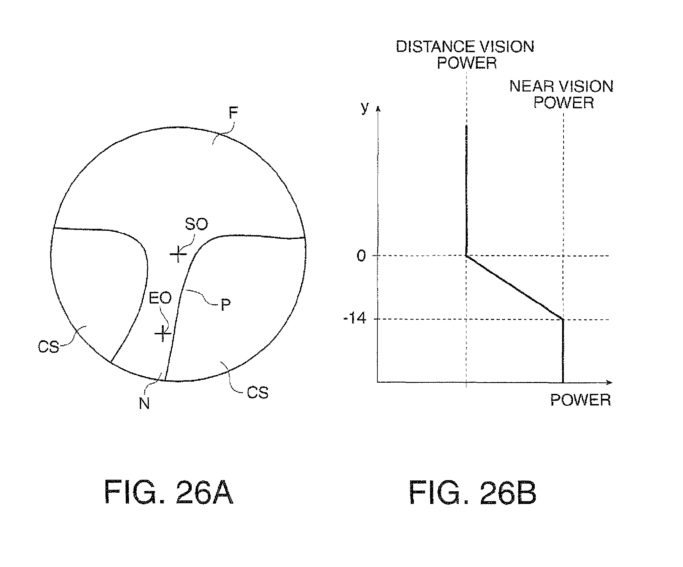

In the example shown in Fig. 24, the progressive start points SO, SI and the progressive end points EO, EI defining the progressive surfaces are unintentionally shifted in xy-coordinates, and the regions of the distance portion F, the progressive portion P, the near portion N, and the intermediate lateral portions CS are shifted between the eyeball side surface and the object side surface in response to the shifts. When the near portion N and the progressive portion P provided on one of the object side surface and the eyeball side surface are superimposed on the intermediate lateral portions CS provided on the other in xy-coordinates, as shown in Fig. 26A, the clear vision areas of the progressive portion P and the near portion N become smaller. Further, as shown in Fig. 26B, the length of the progressive length in specifications is "14 mm", however, the actual progressive length is longer than the length in specifications.

Patent Document 2 discloses a configuration in which the distance portion center points and the near portion center points are respectively set on the object side surface and the eyeball side surface, however, the specific configuration of the progressive portion and conditions of the prism of the eyeglass lens, the forward tilt angle at wearing, the face form, etc. are not considered.

In Patent Document 3, astigmatism regions are intentionally shifted on both sides and, as is the case shown in Figs. 24 and 26A and 26B, inconveniences that the clear vision areas of the progressive portion and the near portion become smaller etc. are caused.

SUMMARY

An advantage of some aspects of the invention is to provide a progressive power eyeglass lens that improves astigmatism on the principal meridian of a progressive portion at wearing of eyeglasses to broaden clear vision areas of the progressive portion and a near portion and achieves addition changes according to specifications and a design method thereof.

An aspect of the invention is directed to A progressive power eyeglass lens including an object side surface that includes a first progressive surface; an eyeball side surface that includes a second progressive surface; and a pair of points that is passed by a light beam passing through a rotation center of an eyeball of an eyeglasses wearer, the pair of points including a first point that exists on a principal meridian on the eyeball side surface between a progressive start point to a progressive end point, and a second point that exists on a principal meridian on the object side surface.

In the aspect of the invention having the configuration, the pair of points are determined based on a trajectory of the light beam output from the eyeball side surface, and thus, the point on the principal meridian on the object side surface and the point on the principal meridian on the eyeball side surface between the progressive start point and the progressive end point are in the same position in visual observation, and the astigmatism on the trajectory of the light beam in the progressive portion at wearing of eyeglasses may be minimized.

Here, in the aspect of the invention, given that surface refractive power of a distance portion is Df, surface refractive power of an arbitrary point on the principal meridian is Dm, and addition of a surface is ADD, and an addition change rate R on the principal meridian is expressed by the following equation: $R = (Dm - Df)/ADD$, the addition change rate of the first point and the addition change rate of the second point may be equal.

In the aspect of the invention having the configuration, at a certain pair of points from the progressive start points to the progressive end points on the principal meridians at which the addition change rates are the same, both surfaces may be the same in visual observation. Accordingly, the astigmatism on the points in the same position may be minimized and the distinct regions of the progressive portion and the near portion may be broadened.

In the aspect of the invention, the first point is the progressive start point on the eyeball side surface, and the second point is a progressive start point on the object side surface.

In the aspect of the invention having the configuration, with respect to the progressive start points as an important element in the design of the eyeglass lens, both surfaces may be the same in visual observation. Thereby, the astigmatism on the principal meridian of the progressive portion at wearing of eyeglasses may be improved and the distinct region of the progressive portion may be broadened.

In the aspect of the invention, the first point is the progressive end point on the eyeball side surface, and the second point is a progressive end point on the object side surface.

In the aspect of the invention having the configuration, with respect to the progressive end points as an important element in the design of the eyeglass lens, both surfaces may be the same in visual observation. Thereby, the astigmatism on the principal meridian of the progressive portion at wearing of eyeglasses may be improved and the distinct regions of the progressive portion and the near portion may be broadened.

In the aspect of the invention, further including a second pair of points that is passed by a second light beam passing through a second optical path different from a first optical path passed through the light beam, the second pair of points including a third point that exists on the principal meridian on the eyeball side surface and that is the progressive end point on the eyeball side surface, and a fourth point that exists on the principal meridian on the object side surface and that is the progressive end point on the object side surface, wherein, the first point is the progressive start point on the eyeball side surface, and the second point is a progressive start point on the object side surface.

In the aspect of the invention having the configuration, at the two points of the progressive start point and the progressive end point as important elements in the design of the eyeglass lens, both surfaces may be the same in visual observation, and, more reliably, the astigmatism on the principal meridian of the progressive portion at wearing of eyeglasses may be improved and the distinct regions of the progressive portion and the near portion may be broadened.

Note that the number of light beams passing through optical paths different from each other may be two or more, and the larger the number, the more the astigmatism on the principal meridian of the progressive portion at wearing of eyeglasses may be improved and the distinct regions of the progressive portion and the near portion may be broadened.

Another aspect of the invention is directed to a method of designing a progressive power eyeglass lens including ray-tracing of computing a light beam entering an object side surface of the progressive power eyeglass lens, outputting from an eyeball side surface of the progressive power eyeglass lens, and passing through a rotation center of an eyeball of an eyeglasses wearer, the object side surface including a first progressive surface and the eyeball side surface including a second progressive surface; and computing an first point and a second point using the ray tracing, the first point existing on a principal meridian on the eyeball side surface between a progressive start point to a progressive end point and the second point existing on a principal meridian on the object side surface.

In the aspect of the invention having the configuration, using a distance from the rotation center of the eyeball of a standard wearer to the eyeball side surface (e.g., 25 mm), a standard forward tilt angle at wearing (e.g., 10 degrees), and a standard face form (e.g., 0 degrees), the relative positions of the eyeball and the lens are determined, the trajectory of the light beam passing through the object side surface and the eyeball side surface is obtained by the ray tracing method, and the position of the point with which the trajectory of the light intersects is computed. Thereby, simply, the progressive power eyeglass lens with the improved astigmatism on the principal meridian of the progressive portion at wearing of eyeglasses and the broadened distinct regions of the progressive portion and the near portion may be designed.

In the above described method of designing a progressive power eyeglass lens, it is preferable to the ray-tracing of computing the light beam using an actually measured distance from the rotation center of the eyeball to the eyeball side surface.

In the aspect of the invention having the configuration, the distance from the rotation center of the eyeball to the eyeball side surface is actually measured with respect to each eyeglasses wearer, and thus, the more accurate trajectory of the light beam passing through pair of points may be obtained with respect to each eyeglasses wearer.

In the above described method of designing a progressive power eyeglass lens, it is preferable to the ray-tracing of computing the light beam using an actually measured forward tilt angle at wearing.

In the aspect of the invention having the configuration, the forward tilt angle at wearing is actually measured with respect to each eyeglasses wearer, and thus, the more accurate trajectory of the light beam passing through the pair of points may be obtained with respect to each eyeglasses wearer.

In the above described method of designing a progressive power eyeglass lens, it is preferable to the ray-tracing of computing the light beam using an actually measured face form.

In the aspect of the invention having the configuration, the face form is actually measured with respect to each eyeglasses wearer, and thus, the more accurate trajectory of the light beam passing through the pair of points may be obtained with respect to each eyeglasses wearer.

BRIEF DESCRIPTION OF THE DRAWINGS

The invention will be described with reference to the accompanying drawings, wherein like numbers reference like elements.

Figs. 1A and 1B show a progressive power eyeglass lens according to one embodiment of the invention, and Fig. 1A is a plan view and Fig. 1B is a conceptual diagram showing principal meridians.

Fig. 2A is a conceptual diagram showing a state in which a light beam enters an eyeball in a vertical surface of the progressive power eyeglass lens, and Fig. 2B is a conceptual diagram showing a state in which a light beam enters the eyeball in a horizontal surface of the progressive power eyeglass lens.

Fig. 3 is a schematic diagram for explanation of a method of obtaining coordinates of a progressive end point.

Fig. 4A is a schematic plan view of the progressive power eyeglass lens, and Fig. 4B is a graph showing power on the principal meridian.

Fig. 5 shows xy-coordinates of a principal meridian of working example 1.

Fig. 6 shows xy-coordinates of a principal meridian of working example 2.

Fig. 7 shows xy-coordinates of a principal meridian of working example 3.

Fig. 8 shows xy-coordinates of a principal meridian of working example 4.

Fig. 9 shows xy-coordinates of principal meridians of comparative examples 1 to 4.

Figs. 10A and 10B show an object side surface of working example 1, and Fig. 10A shows astigmatism and Fig. 10B shows average power.

Figs. 11A and 11B show an eyeball side surface of working example 1, and Fig. 11A shows astigmatism and Fig. 11B shows average power.

Figs. 12A and 12B show visual observation conditions of working example 1, and Fig. 12A shows astigmatism and Fig. 12B shows average power.

Figs. 13A and 13B show an object side surface of working example 2, and Fig. 13A shows astigmatism and Fig. 13B shows average power.

Figs. 14A and 14B show an eyeball side surface of working example 2, and Fig. 14A shows astigmatism and Fig. 14B shows average power.

Figs. 15A and 15B show visual observation conditions of working example 2, and Fig. 15A shows astigmatism and Fig. 15B shows average power.

Figs. 16A and 16B show an object side surface of working example 3, and Fig. 16A shows astigmatism and Fig. 16B shows average power.

Figs. 17A and 17B show an eyeball side surface of working example 3, and Fig. 17A shows astigmatism and Fig. 17B shows average power.

Figs. 18A and 18B show visual observation conditions of working example 3, and Fig. 18A shows astigmatism and Fig. 18B shows average power.

Figs. 19A and 19B show an object side surface of working example 4, and Fig. 19A shows astigmatism and Fig. 19B shows average power.

Figs. 20A and 20B show an eyeball side surface of working example 4, and Fig. 20A shows astigmatism and Fig. 20B shows average power.

Figs. 21A and 21B show visual observation conditions of working example 4, and Fig. 21A shows astigmatism and Fig. 21B shows average power.

Fig. 22 is a graph showing relationships of astigmatism and y-coordinates between working example 4 and comparative example 4.

Fig. 23 is a plan view of an eyeglass lens in a related art example.

Fig. 24 is a plan view of an eyeglass lens in a related art example.

Fig. 25A is a schematic plan view of the eyeglass lens shown in Fig. 23, and Fig. 25B is a graph showing power on a principal meridian.

Fig. 26A is a schematic plan view of the eyeglass lens shown in Fig. 24, and Fig. 26B is a graph showing power on a principal meridian.

Fig. 27A shows x, y, z-axes in an embodiment of the invention, Fig. 27B shows a relationship between a forward tilt angle at wearing and the z-axis, and Fig. 27C shows a relationship between a face form and the z-axis.

DESCRIPTION OF EXEMPLARY EMBODIMENTS

As below, one embodiment of the invention will be explained according to the drawings.

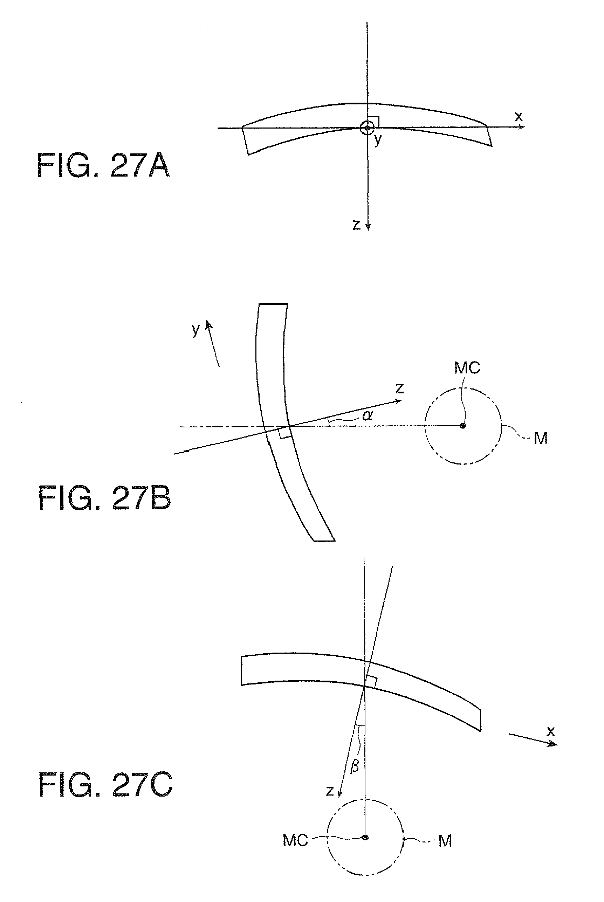

Note that, in the following embodiment and all working examples, as shown in Fig. 27A, at a fitting point on an eyeball side surface, a straight line perpendicular to the eyeball side surface is the z-axis, a straight line orthogonal to the z-axis and horizontal at wearing of eyeglasses is the x-axis, and a straight line orthogonal to the x-axis and the z-axis is the y-axis. A forward tilt angle at wearing $\alpha$ is an angle within a perpendicular surface of a visual axis of an eye in a primary eye position at wearing of eyeglasses and the z-axis as shown in Fig. 27B. A face form $\beta$ is an angle within a horizontal surface of the visual axis of the eye in the primary eye position at wearing of eyeglasses and the z-axis as shown in Fig. 27C.

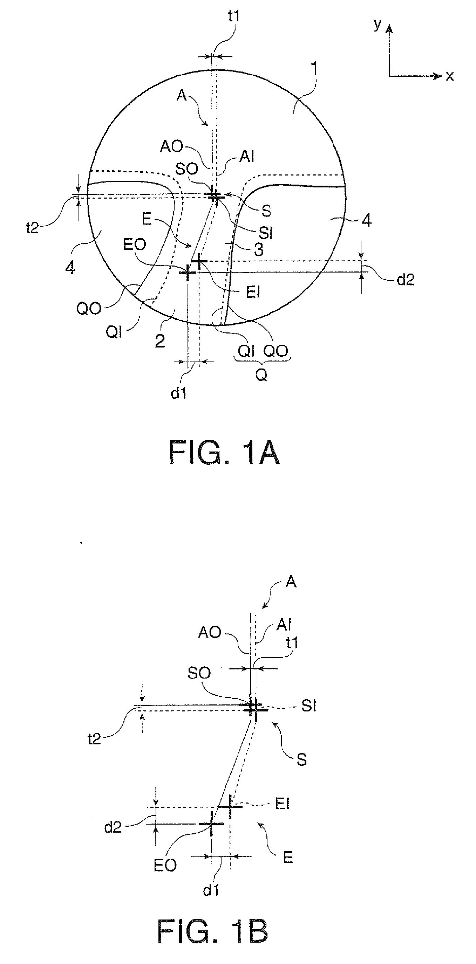

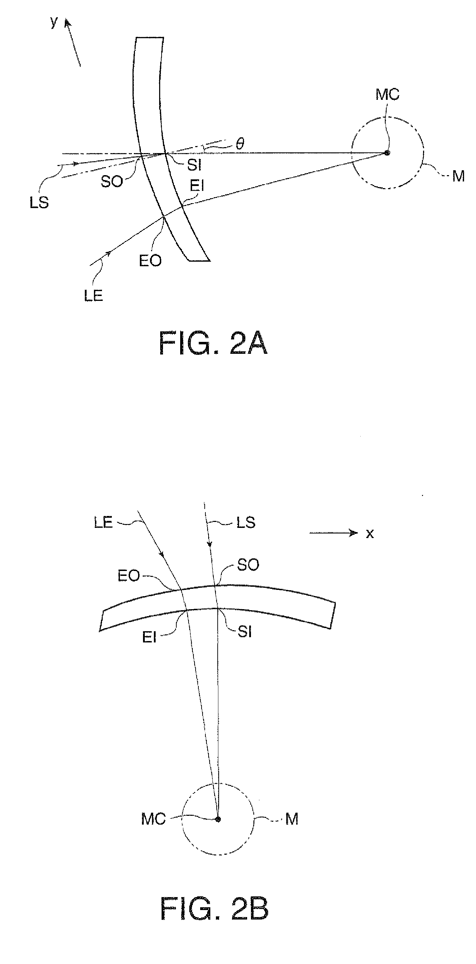

Figs. 1A and 1B show a progressive power eyeglass lens according to the embodiment, and Fig. 1A is a plan view and Fig. 1B is a conceptual diagram showing principal meridians. Figs. 2A and 2B are states in which a light beam passes through the progressive power eyeglass lens and enters an eyeball, and Fig. 2A is a conceptual diagram showing a state in which a light beam enters an eyeball in a vertical surface of the progressive power eyeglass lens and Fig. 2B is a conceptual diagram showing a state in which a light beam enters the eyeball in a horizontal surface of the progressive power eyeglass lens.

In Fig. 1A, the progressive power eyeglass lens has a distance portion 1 with refractive power for distance vision, a near portion 2 with refractive power for near vision, a progressive portion 3 provided between the distance portion 1 and the near portion 2, and intermediate lateral portions 4 provided on both sides of the progressive portion 3.

In Fig. 1A, the left side is an ear side and the right side is a nose side.

Boundary lines Q are shown in boundary parts between the distance portion 1, the near portion 2, and the progressive portion 3 and the intermediate lateral portions 4.

A principal meridian A is provided over the distance portion 1, the progressive portion 3, and the near portion 2. The principal meridian A is a position on the lens in which visual lines frequently passes at wearing, and provided vertically nearly in the center part in the distance portion 1, provided to be inclined toward the nose side in the progressive portion 3, and provided to extend vertically in the near portion 2. In the near portion 2, the principal meridian A is deviated toward the nose side by convergence near point at close-range observation.

Of the principal meridian A, a part provided at the upper end of the progressive portion 3 is a progressive start point S, and a part provided at the lower end is a progressive end point E. A part between the progressive start point S and the progressive end point E of the principal meridian A is a progressive surface in which addition continuously changes.

The progressive power eyeglass lens is attached to a frame (not shown) at a forward tilt angle of θ (see Figs. 2A), and has a prism at the progressive start point S.

In the embodiment, two sets of progressive start point S and the progressive end point E are points on trajectories on which a light beam passes.

As shown in Fig. 1B, in the embodiment, as the principal meridian A, a principal meridian AO provided on the object side surface (outer surface) and a principal meridian AI provided on the eyeball side surface (inner surface) of an eyeglass wearer are separately set and the principal meridians AO, AI are provided to be shifted in xy-coordinates as a plane orthogonal to the lens z-axis. Further, as the progressive start point S, a progressive start point SO corresponding to the principal meridian AO provided on the object side surface and a progressive start point SI corresponding to the principal meridian AI provided on the eyeball side surface are separately set. Similarly, as the progressive end point E, a progressive end point EO corresponding to the principal meridian AO provided on the object side surface and a progressive end point EI corresponding to the principal meridian AI provided on the eyeball side surface are separately set. In the embodiment, the principal meridian AO provided on the object side surface is designed to be the same as that in related art, and the principal meridian AI provided on the eyeball side surface is designed in the position shifted relative to the principal meridian AO.

The regions of the distance portions 1, the near portions 2, the progressive portions 3, and the intermediate lateral portions 4 are also different between the object side surface and the eyeball side surface, and, as the boundary lines Q between the distance portion 1, the near portion 2, and the progressive portion 3 and the intermediate lateral portions 4, boundary lines QO at the object side and boundary lines QI at the eyeball side are separately set.

Since the progressive start point S of the lens has the forward tilt angle at wearing and the prism, the progressive start point SI on the eyeball side surface is separated at t1 in the x direction and t2 in the y direction from the progressive start point SO at the object side.

The progressive end point EI on the eyeball side surface is separated at d1 in the x direction and d2 in the y direction from the progressive end point EO at the object side. That is, in the embodiment, the progressive lengths as y-direction dimensions from the progressive start points S to the progressive end points E are different between the principal meridian AO at the object side and the principal meridian AI at the eyeball side, and insets are different between the principal meridian AO and the principal meridian AI.

In Figs. 2A and 2B, a light beam entering the object side surface of the progressive power eyeglass lens outputs from the eyeball side surface and enters the eyeball of the eyeglasses wearer.

That is, a light beam LS entering the progressive start point SO on the object side surface outputs from the progressive start point SI on the eyeball side surface, and then, enters a rotation center MC of the eyeball M. Similarly, a light beam LE entering the progressive end point EO on the object side surface outputs from the progressive start point SI on the eyeball side surface, and then, enters the rotation center MC of the eyeball M.

Computation of the progressive start points SO, SI and the progressive end points EO, EI is performed by a ray tracing method. The ray tracing method is for calculating in which route light entering an eyeglass lens outputs from the eyeball side surface and where the light is focused. In the embodiment, coordinates of the progressive end points EO, EI are obtained using a distance L from the rotation center MC of the eyeball M to the eyeball side surface. The distance L from the rotation center MC of the eyeball M to the eyeball side surface is obtained by actual measurement. Note that, in the embodiments of the invention, a standard value (25 mm) may be used for the distance L from the rotation center MC of the eyeball M to the eyeball side surface.

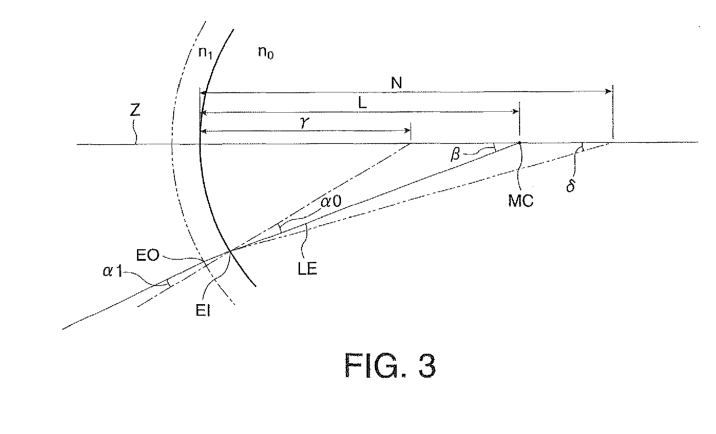

In Fig. 3, the coordinates of the progressive end point EO provided on the object side surface are obtained using the same method as that in related art. Further, the progressive end point EI provided on the eyeball side surface is obtained using the ray tracing method from the known coordinates of the progressive end point EO, the distance L from the rotation center MC of the eyeball M to the eyeball side surface, etc.

In the ray tracing method, the light beams outputting from the rotation center MC of the eyeball and passing through the progressive end points EI, EO are traced.

Given that a lens radius is r, a refractive index of the lens is n1, a refractive index of the air is n0, an incident angle of the light beam LE at the progressive end point EI is $\alpha$1, an exit angle is $\alpha$0, an angle formed by a normal line of the lens at the progressive end point EI and an optical axis Z of the lens is $\beta$, an angle formed by an extension line of the light beam LE transmitted through the lens and the optical axis Z is $\gamma$, and a distance between an intersection of the extension line and the optical axis Z and a point at which the optical axis Z intersects with the eyeball side surface of the lens is N, there are the following relationships.

$$r \cdot Sin\alpha1 = (N - r) \cdot Sin\gamma \quad (1)$$

$$\beta + \alpha0 = \gamma + \alpha1 \quad (2)$$

$$r \cdot Sinn0 = (L - r) \cdot Sin\beta \quad (3)$$

$$n1Sin\alpha1 = n0Sin\alpha0 \quad (4)$$

The progressive end point EI on the eyeball side surface is computed based on the above equations and known data, and then, the coordinates of the progressive start point SI are obtained in the same procedure. Further, the coordinates of the points on the principal meridian between the progressive start point SI and the progressive end point EI are also obtained in the same procedure.

Note that, in the embodiment, as described above, the progressive start point SO and the progressive end point EO provided on the object side surface of the lens may be designed in the manner in related art, and the progressive start point SI and the progressive end point EI provided on the eyeball side surface may be set to be shifted in xy-coordinates relative to the progressive start point SO and the progressive end point EO. However, inversely, that is, the progressive start point SI and the progressive end point EI provided on the eyeball side surface of the lens may be designed in the manner in related art, and the progressive start point SO and the progressive end point EO provided on the object side surface may be set to be shifted in xy-coordinates relative to the progressive start point SI and the progressive end point EI.

Given that a distance between a back vertex at which the eyeball side surface of the progressive power eyeglass lens intersects with the z-axis and the rotation center MC of the eyeball M is a radius, an arc passing thorough the back vertex around the rotation center MC is a final surface, a distance from the final surface to an imaging point on the maximum refractive power section is Lm (unit: mm), a distance from the final surface to an imaging point on the minimum refractive power section is Ls (unit: mm), and a distance between the back vertex to a paraxial imaging point is back focus FB (unit: mm), an average power error AP (unit: Dptr) is obtained from the following equation.

$$AP = 0.5\{(1000/Lm) + (1000/Ls)\} - (1000/FB) \quad (5)$$

Further, a magnitude of astigmatism AS (unit: Dptr) is obtained from the following equation.

$$AS = \{(1000/Lm) + (1000/Ls)\} \quad (6)$$

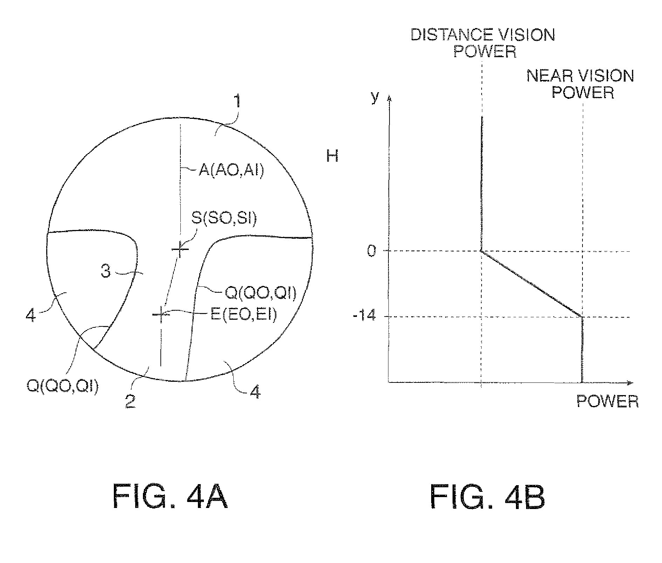

Fig. 4A is a schematic plan view of the progressive power eyeglass lens, and Fig. 4B is a graph showing power on the principal meridian.

Fig. 4A shows the visually observed progressive power eyeglass lens, and the principal meridian AO on the object side surface and the principal meridian AI on the eyeball side surface of the lens coincide with each other in visual observation. That is, the progressive start points SO, SI on both sides are in the same position in visual observation, and the progressive end points EO, EI are in the same position in visual observation.

The progressive start point S (SO, SI) is the position in which the distance portion 1 and the progressive portion 3 are switched and, in the position, as shown in Fig. 4B, distance vision power is provided. Further, the power continuously changes from the progressive start point S (SO, SI) toward the progressive end point E (EO, EI), and, as shown in Fig. 4B, near vision power according to the specifications is provided.

In the embodiment, the progressive length from the progressive start point S (SO, SI) to the progressive end point E (EO, EI) is according to the specifications with reference to the object side surface (the progressive length is "14 mm" according to the specifications with reference to the object side surface in Fig. 4B).

Working Examples

Next, working examples corresponding to the embodiment will be explained.

Working Example 1

General wearing condition (forward tilt angle: 10° and face form: 0°) is assumed.

Plus lens prescription:

S = +3.00
ADD = 1.75
Prism = 3.00 prism dioptre
Prism base direction = 0°
Center thickness: 6.6 mm

Object side surface:

Distance vision curve = 6
Near vision curve = 5
Surface addition = -1.00 Dptr
Progressive start point SO (x,y) = (0.00 mm, 0.00 mm)
Progressive end point EO (x,y) = (-2.50 mm, -14.00 mm)

Eyeball side surface:

Distance vision curve = 3
Near vision curve = 0
Surface addition = +3.00 Dptr
Progressive start point SI (x,y) = (0.11 mm, -0.61 mm)
Progressive end point EI (x,y) = (-2.06 mm, -12.67 mm)

Note that the coordinates of the fitting point are set to origin (0,0).

The above described setting conditions are listed in Table 1 to Table 3.

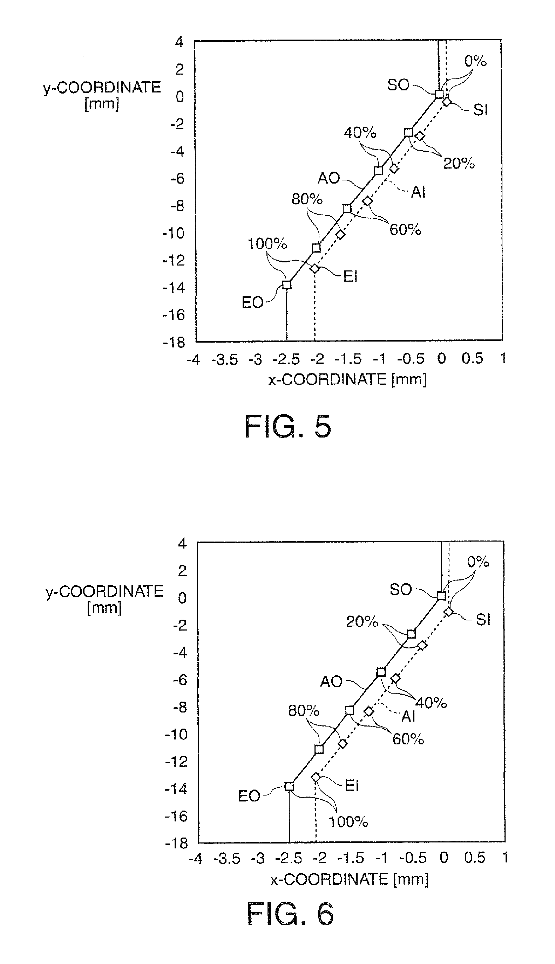

The progressive start point SO and the progressive end point EO provided on the object side surface are designed as in related art, and the progressive start point SI and the progressive end point EI provided on the eyeball surface are set to be shifted in xy-coordinates relative to the progressive start point SO and the progressive end point EO. Specifically, the coordinates are set as shown in Fig. 5. The distance L from the rotation center MC of the eyeball M to the eyeball side surface is set to 25 mm as the standard value.

In Fig. 5, addition change rates are indicated in percentage (the progressive start point is at 0% and the progressive end point is at 100%). At the points of the same addition change rate, the light beams are aligned in visual observation.

In working example 1, the forward tilt angle at wearing and the prescribed prism are considered, and the positions are also shifted near the progressive start point (fitting point).

Working Example 2

Wearing condition (forward tilt angle: 20° and face form: 0°) is assumed.
Plus lens prescription is the same as that of working example 1.
Setting of the object side surface is the same as that of working example 1.
Setting of the eyeball side surface is the same as that of working example 1 except the coordinates of the progressive start point SI and the progressive end point EI. Progressive start point SI (x,y) = (0.11 mm, -1.25 mm) Progressive end point EI (x,y) = (-2.05 mm, -13.27 mm)

The above described setting conditions are listed in Table 1 to Table 3.

In working example 2, as is the case of working example 1, the progressive start point SO and the progressive end point EO provided on the object side surface are designed as in related art, and the progressive start point SI and the progressive end point EI provided on the eyeball surface are set to be shifted in xy-coordinates relative to the progressive start point SO and the progressive end point EO. Specifically, the coordinates are set as shown in Fig. 6.

As is the case of working example 1, in working example 2, the forward tilt angle at wearing and the prescribed prism are considered, and the positions are also shifted near the progressive start point (fitting point). The difference from working example 1 is the assumed forward tilt angle is larger. Therefore, when the forward tilt angle is made larger, it is necessary to further shift the principal meridian on the eyeball side surface downward (toward the negative side of y-coordinates) relative to the principal meridian on the object side surface. With reference to the eyeball side surface, it is necessary to shift the principal meridian on the object side surface upward (toward the positive side of y-coordinates) relative to the principal meridian on the eyeball side surface.

Working Example 3

General wearing condition (forward tilt angle: 10° and face form: 0°) is assumed.

Minus lens prescription:

S = -8-50
ADD = 2.75
Center thickness: 1.3 mm

Object side surface:

Distance vision curve = 1
Near vision curve = 2.5
Surface addition = +1.50 Dptr
Progressive start point SO (x,y) = (0.00 mm, 0.00 mm)
Progressive end point EO (x,y) = (-2.50 mm, -14.00 mm)

Eyeball side surface:

Distance vision curve = 9.5
Near vision curve = 8
Surface addition = +1.50 Dptr
Progressive start point SI (x,y) = (0.00 mm, -0.15 mm)
Progressive end point EI (x,y) = (-2.35 mm, -13.41 mm)

The above described setting conditions are listed in Table 1 and Table 2.

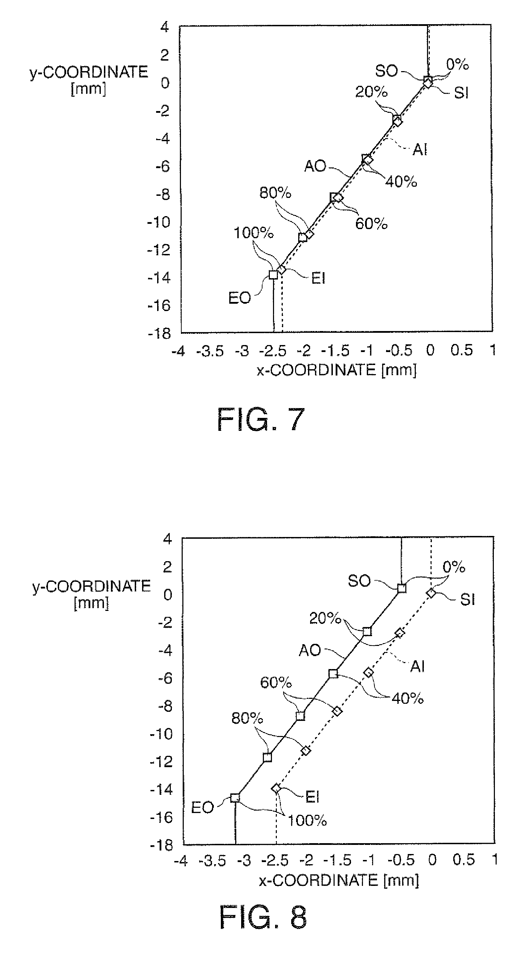

The progressive start point SO and the progressive end point EO provided on the object side surface are designed as in related art, and the progressive start point SI and the progressive end point EI provided on the eyeball surface are set to be shifted in xy-coordinates relative to the progressive start point SO and the progressive end point EO. Specifically, the coordinates are set as shown in Fig. 7. At the points of the same addition change rate, the light beams are aligned in visual observation.

As is the case of working example 1, in working example 3, the forward tilt angle at wearing is considered and prismatic thinning (prism = 2.00 prism dioptre, prism base direction = 90°) is performed for thinning the lens, and the positions are also shifted near the progressive start point (fitting point).

Working Example 4

Forward tilt angle of 10° and face form of 20° are assumed.

High curve lens prescription:

S = +0.00
ADD = 2.00
Center thickness: 2.2 mm

Object side surface:

Distance vision curve = 6
Near vision curve = 5
Surface addition = +1.00 Dptr
Progressive start point SO (x,y) = (-0.48 mm, 0.21 mm)
Progressive end point EC (x,y) = (-3.15 mm, -14.66 mm)

Eyeball side surface:

Distance vision curve = 6
Near vision curve = 5
Surface addition = +1.00 Dptr
Progressive start point SI (x,y) = (0.00 mm, 0.00 mm)
Progressive end point EI (x,y) = (-2.50 mm, -14.00 mm)

The above described setting conditions are listed in Table 4 to Table 6.

The progressive start point SI and the progressive end point EI provided on the eyeball side surface are designed as in related art, and the progressive start point SO and the progressive end point EO provided on the object surface are set to be shifted in xy-coordinates relative to the progressive start point SI and the progressive end point EI. Specifically, the coordinates are set as shown in Fig. 8. At the points of the same addition change rate, the light beams are aligned in visual observation.

As is the case of working example 1, in working example 4, the forward tilt angle at wearing is considered and prismatic thinning (prism = 1.10 prism dioptre, prism base direction = 270°) is performed for thinning the lens, and the positions are also shifted near the progressive start point (fitting point).

When the face form is made larger, it is necessary to further shift the principal meridian on the object side surface toward the nose side (toward the negative side of x-coordinates) relative to the principal meridian on the eyeball side surface. With reference to the object side surface, it is necessary to shift the principal meridian on the eyeball side surface toward the ear side (toward the positive side of y-coordinates) relative to the principal meridian on the object side surface.

Comparative Example 1

Comparative example 1 corresponds to working example 1, and different in setting of the eyeball side surface from working example 1.

That is, in comparative example 1, the setting of the eyeball side surface is made the same as the setting of the object side surface.

Progressive start point SO, SI (x,y) = (0.00 mm, 0.00 mm)

Progressive end point EO, EI (x,y) = (-2.50 mm, -14.00 mm)

The above described setting conditions are listed in Table 1 to Table 3.

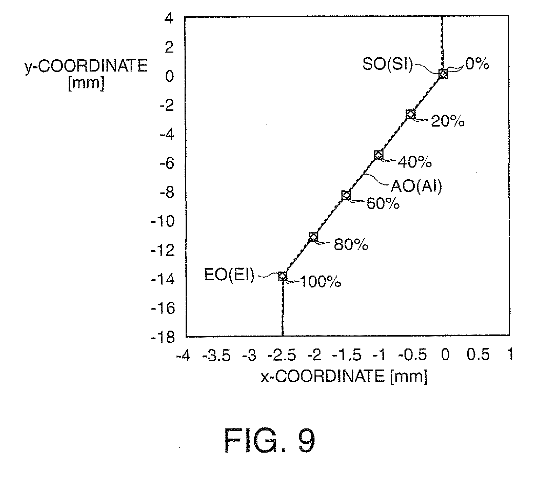

Specifically, the coordinates are set as shown in Fig. 9.

Comparative Example 2

Comparative example 2 corresponds to working example 2, and different in setting of the eyeball side surface from working example 2.

That is, in comparative example 2, the setting of the eyeball side surface is made the same as the setting of the object side surface.

Progressive start point SO, SI (x,y) = (0.00 mm, 0.00 mm)

Progressive end point EO, EI (x,y) = (-2.50 mm, -14.00 mm)

The above described setting conditions are listed in Table 1 to Table 3.

Specifically, the coordinates are set as shown in Fig. 9.

Comparative Example 3

Comparative example 3 corresponds to working example 3, and different in setting of the eyeball side surface from working example 3.

That is, in comparative example 3, the setting of the eyeball side surface is made the same as the setting of the object side surface.

Progressive start point SO, SI (x,y) = (0.00 mm, 0.00 mm)

Progressive end point EO, EI (x,y) = (-2.50 mm, -14.00 mm)

The above described setting conditions are listed in Table 1 to Table 3.

Specifically, the coordinates are set as shown in Fig. 9.

Comparative Example 4

Comparative example 4 corresponds to working example 4, and different in setting of the object side surface from working example 4.

That is, in comparative example 4, the setting of the eyeball side surface is made the same as the setting of the object side surface.

Progressive start point SO, SI (x,y) = (0.00 mm, 0.00 mm)

Progressive end point EO, EI (x,y) = (-2.50 mm, -14.00 mm)

The above described setting conditions are listed in Table 4 to Table 6.

Specifically, the coordinates are set as shown in Fig. 9.

Reference Example 1

Reference example 1 assumes an example in Fig. 24, corresponds to working example 1, and is different in setting of the eyeball side surface from working example 1.

That is, in reference example 1, the setting of the eyeball side surface is made as follows.

Progressive start point SI (x,y) = (-2.00 mm, -2.00 mm)

Progressive end point EI (x,y) = (-4.50 mm, -16.00 mm)

The above described setting conditions are listed in Table 1 to Table 3.

Reference Example 2

Reference example 2 assumes an example in Fig. 24, corresponds to working example 3, and is different in setting of the eyeball side surface from working example 3.

That is, in reference example 2, the setting of the eyeball side surface is made as follows.

Progressive start point SI (x,y) = (2.00 mm, 2.00 mm) Progressive end point EI (x,y) = (-0.50 mm, -12.00 mm)

The above described setting conditions are listed in Table 1 to Table 3.

Table 1

|  | Prescription | | | | | |
|---|---|---|---|---|---|---|
|  | S | ADD | C | Ax | Prism | Prism base direction |
| Working example 1 | +3.00 | 1.75 | - | - | 3.00 | 0 |
| Working example 2 |  |  |  |  |  |  |
| Comparative examples 1 and 2 |  |  |  |  |  |  |
| Reference example 1 |  |  |  |  |  |  |
| Working example 3 | -8.50 | 2.75 | - | - | 2.00 | 90 |
| Comparative example 3 |  |  |  |  |  |  |
| Reference example 2 |  |  |  |  |  |  |

Table 2

|  | Object side surface (outer surface) | | | | | | |
|---|---|---|---|---|---|---|---|
|  | Distance vision curve [D] | Near vision curve [D] | Surface addition [D] | Progressive start point | | Progressive end point | |
|  |  |  |  | x coordinate | y coordinate | x coordinate | y coordinate |
| Working example 1 | 6 | 5 | -1.00 | 0.00 | 0.00 | -2.50 | -14.00 |
| Working example 2 |  |  |  |  |  |  |  |
| Comparative examples 1 and 2 |  |  |  |  |  |  |  |
| Reference example 1 |  |  |  |  |  |  |  |
| Working example 3 | 1 | 2.5 | +1.50 | 0.00 | 0.00 | -2.50 | -14.00 |
| Comparative example 3 |  |  |  |  |  |  |  |
| Reference example 2 |  |  |  |  |  |  |  |

Table 3

| | Eyeball side surface (inner surface) | | | | | | | Lens center thickness [mm] |
|---|---|---|---|---|---|---|---|---|
| | Distance vision curve [D] | Near vision curve [D] | Surface addition [D] | Progressive start point [mm] | | Progressive end point [mm] | | |
| | | | | x coordinate | y coordinate | x coordinate | y coordinate | |
| Working example 1 | 3 | 0 | +3.00 | 0.11 | -0.61 | -2.06 | -12.67 | 6.6 |
| Working example 2 | | | | 0.11 | -1.25 | -2.05 | -14 00 | |
| Comparative examples 1,2 | | | | 0.00 | 0.00 | -2.50 | -14.00 | |
| Reference example 1 | | | | -2.00 | -2.00 | -4.50 | -16.00 | |
| Working example 3 | 9.5 | 8 | +1.50 | 0.00 | -0.15 | -2.35 | -13.41 | 1.3 |
| Comparative example 3 | | | | 0.00 | 0.00 | -2.50 | -14.00 | |
| Reference example 2 | | | | 2.00 | 2.00 | -0.50 | -12.00 | |

Table 4

| | Prescription | | | | | |
|---|---|---|---|---|---|---|
| | S | ADD | C | Ax | Prism | Prism base direction |
| Working example 4 | +0.00 | 2.00 | - | - | 1.1 | 270 |
| Comparative example 4 | | | | | | |

Table 5

| | Object side surface (outer surface) | | | | | | |
|---|---|---|---|---|---|---|---|
| | Distance vision curve [D] | Near vision curve [D] | Surface addition [D] | Progressive start point | | Progressive end point | |
| | | | | x coordinate | y coordinate | x coordinate | y coordinate |
| Working example 4 | 6 | 7 | +1.00 | -0.48 | 0.21 | -3.15 | -14.66 |
| Comparative example 4 | | | | 0.00 | 0.00 | -2.50 | -14.00 |

Table 6

| | Eyeball side surface (inner surface) | | | | | | | Center thickness [mm] |
|---|---|---|---|---|---|---|---|---|
| | Distance vision curve [D] | Near vision curve [D] | Surface addition [D] | Progressive start point [mm] | | Progressive end point [mm] | | |
| | | | | x coordinate | y coordinate | x coordinate | y coordinate | |
| Working example 4 | 6 | 5 | +1.00 | 0.00 | 0.00 | -2.50 | -14.00 | 2.2 |
| Comparative example 4 | | | | | | | | |

Next, differences in effects among working examples 1 to 4, comparative examples 1 to 4, and reference examples 1, 2 will be explained.

Regarding working examples 1 to 4, object side surfaces, eyeball side surfaces, and visually observed conditions are shown in the drawings.

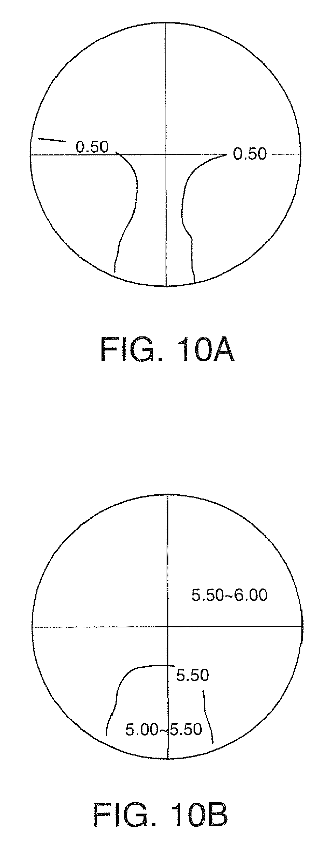

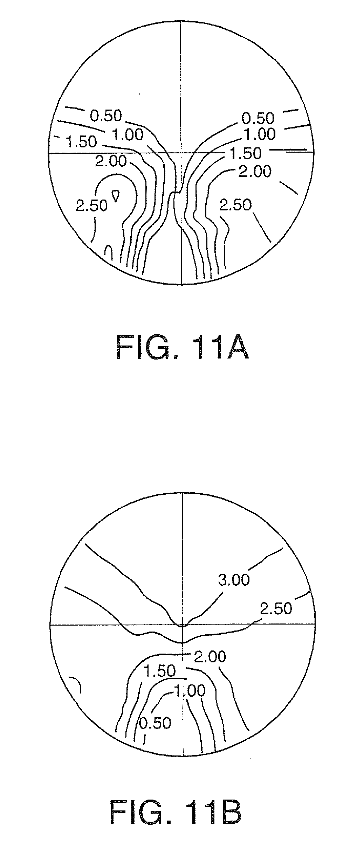

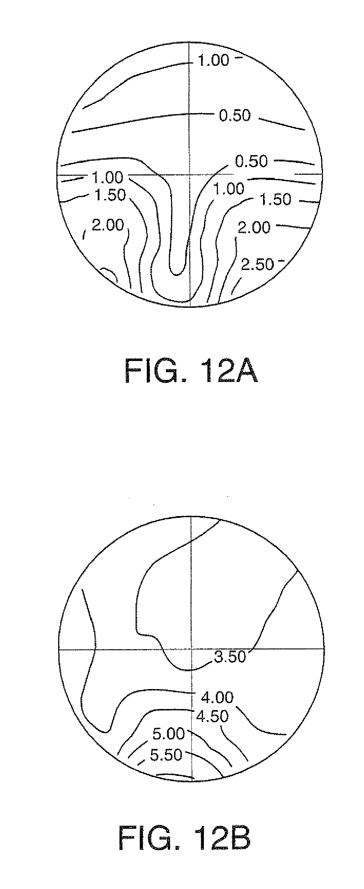

Working example 1 is shown in Figs. 10A to 12B. Figs. 10A and 10B show an object side surface of working example 1, and Fig. 10A shows astigmatism and Fig. 10B shows average power. Figs. 11A and 11B show an eyeball side surface of working example 1, and Fig. 11A shows astigmatism and Fig. 11B shows average power. Figs. 12A and 12B show visual observation conditions of working example 1, and Fig. 12A shows astigmatism and Fig. 12B shows average power.

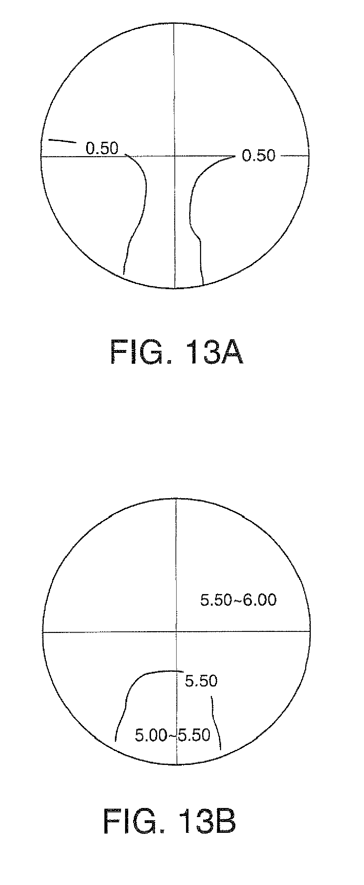

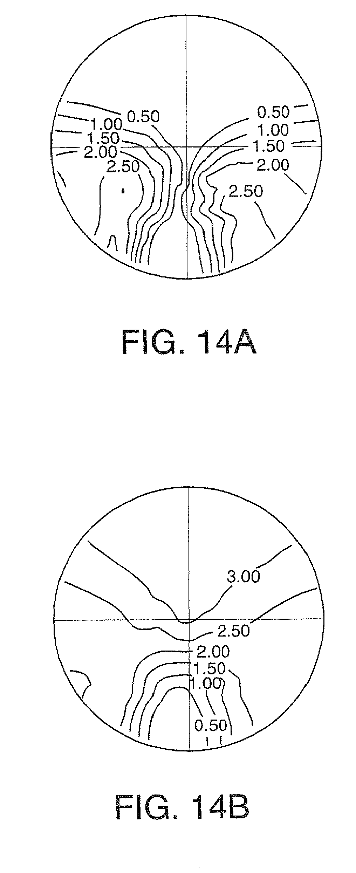

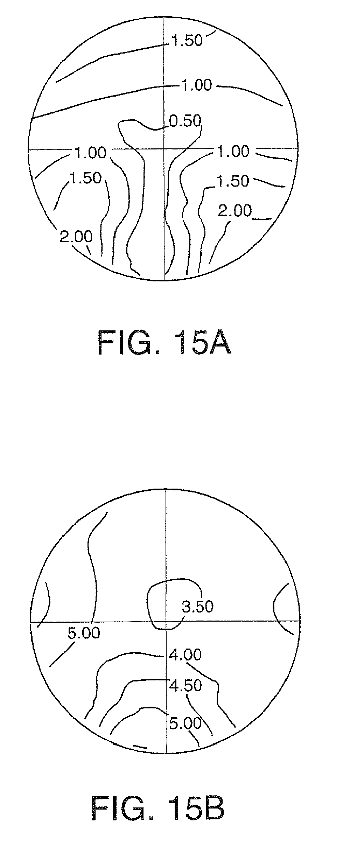

Working example 2 is shown in Figs. 13A to 15B. Figs. 13A and 13B show an object side surface of working example 2, and Fig. 13A shows astigmatism and Fig. 13B shows average power. Figs. 14A and 14B show an eyeball side surface of working example 2, and Fig. 14A shows astigmatism and Fig. 14B shows average power. Figs. 15A and 15B show visual observation conditions of working example 2, and Fig. 15A shows astigmatism and Fig. 15B shows average power.

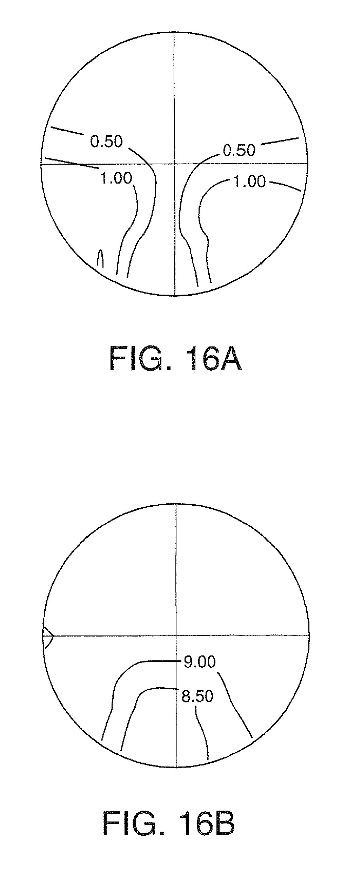

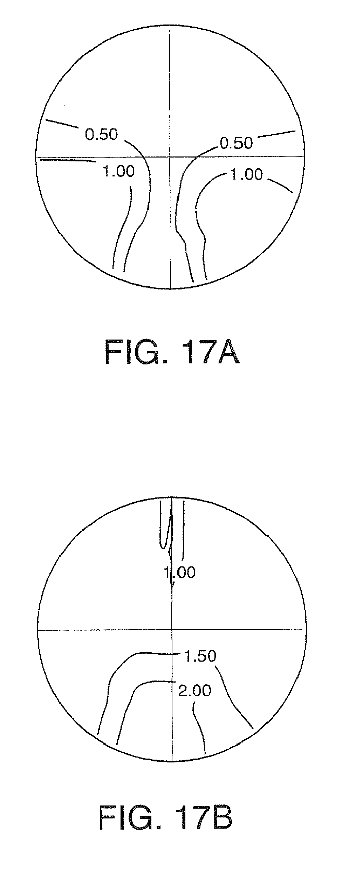

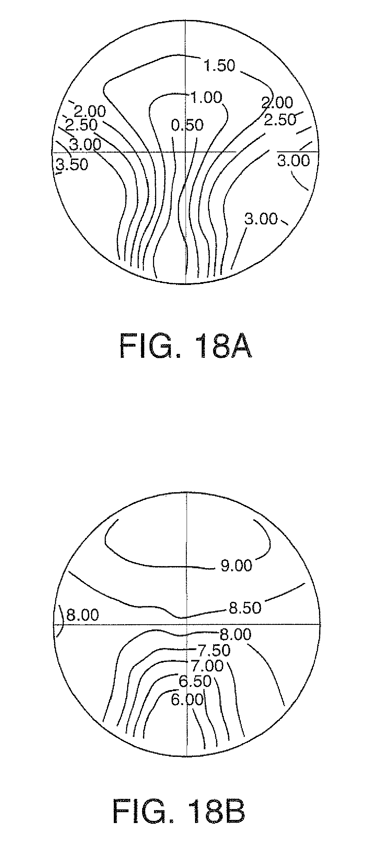

Working example 3 is shown in Figs. 16A to 18B. Figs. 16A and 16B show an object side surface of working example 3, and Fig. 16A shows astigmatism and Fig. 16B shows average power. Figs. 17A and 17B show an eyeball side surface of working example 3, and Fig. 17A shows astigmatism and Fig. 17B shows average power. Figs. 18A and 18B show visual observation conditions of working example 3, and Fig. 18A shows astigmatism and Fig. 18B shows average power.

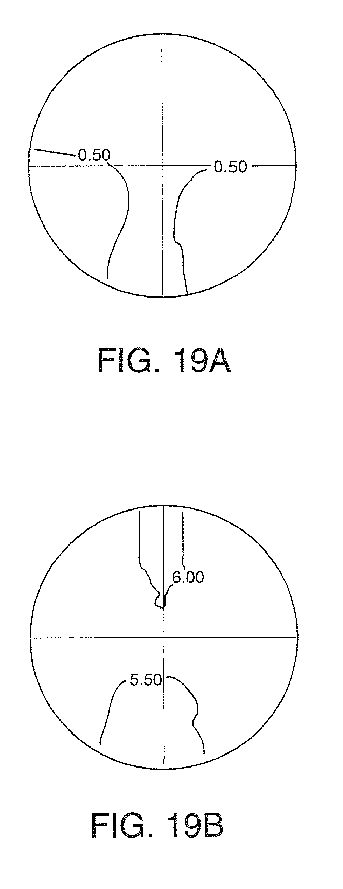

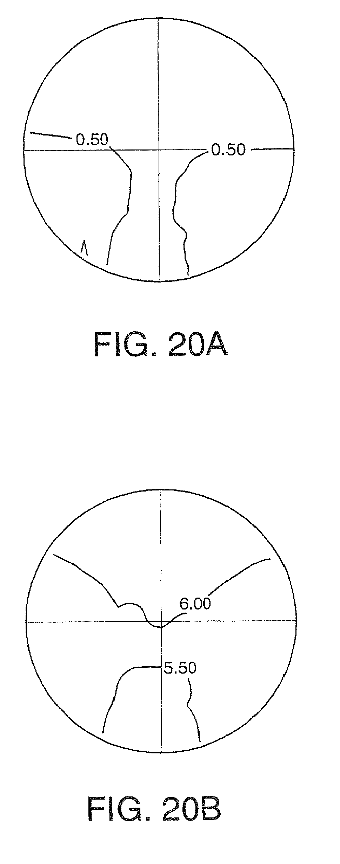

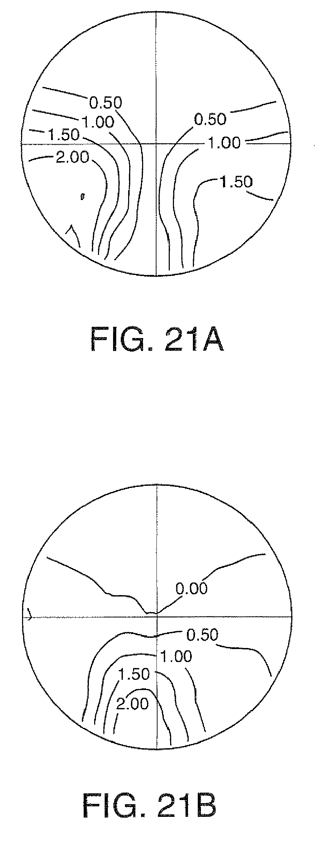

Working example 4 is shown in Figs. 19A to 21B. Figs. 19A and 19B show an object side surface of working example 4, and Fig. 19A shows astigmatism and Fig. 19B shows average power. Figs. 20A and 20B show an eyeball side surface of working example 4, and Fig. 20A shows astigmatism and Fig. 20B shows average power. Figs. 21A and 21B show visual observation conditions of working example 4, and Fig. 21A shows astigmatism and Fig. 21B shows average power.

Regarding working example 1 to 3, comparative examples 1 to 3, and reference examples 1, 2, simulations of astigmatism on principal meridians, distinct vision widths, differences in average power between light beams passing through the progressive start points and light beams passing through the progressive end points on the object side surfaces (outer surfaces) at wearing of lenses (visual observation) are performed. Results of the simulations are shown in Table 7.

In Table 7, the distinct vision width indicates a width in the horizontal direction within astigmatism of 0.5 dioptre (D) around the principal meridian. Further, the design goal is to bring the difference in average power between the light beam passing through the progressive start point and the light beam passing through the progressive end point on the outer surface closer to the prescribed ADD.

Table 7

| | Forward tilt angle | Face form | Astigmatism on principal meridian | | Distinct width | | Difference in average power between light beams passing through progressive start point and progressive end point on the outer surface | |
|---|---|---|---|---|---|---|---|---|
| | | | y=0 | y=-14 | Distance vision (y = 5) | Near vision (y = -17) | Value | Error with respect to target |
| Working example 1 | 10 | 0 | 0.087 | 0.417 | 64.63 | 3.69 | 1.81 | +0.06 |
| Working example 2 | 20 | 0 | 0.340 | 0.153 | 0.00 | 8.15 | 1.44 | -0.31 |
| Working example 3 | 10 | 0 | 0.150 | 0.034 | 1.14 | 5.34 | 2.72 | -0.03 |
| Comparative example 1 | 10 | 0 | 0.109 | 0.420 | 63.17 | 2.25 | 1.57 | -0.18 |

(continued)

| | Forward tilt angle | Face form | Astigmatism on principal meridian | | Distinct width | | Difference in average power between light beams passing through progressive start point and progressive end point on the outer surface | |
|---|---|---|---|---|---|---|---|---|
| | | | y=0 | y=-14 | Distance vision (y = 5) | Near vision (y = -17) | Value | Error with respect to target |
| Comparative example 2 | 20 | 0 | 0.392 | 0.163 | 0.00 | 7.26 | 1.20 | -0.55 |
| Comparative example 3 | 10 | 0 | 0.153 | 0.039 | 1.08 | 5.13 | 2.68 | -0.07 |
| Reference example 1 | 10 | 0 | 0.279 | 0.801 | 51.54 | 0.00 | 1.20 | -0.55 |
| Reference example 2 | 10 | 0 | 0.294 | 0.244 | 0.00 | 3.25 | 2 57 | -0.18 |

As shown in Table 7, in comparison among working example 1, comparative example 1, and reference example 1, in working example 1, astigmatism on the principal meridian is smaller and the distinct width is wider than those in comparative example 1 and reference example 1.

Similarly, in comparison between working example 2 and comparative example 2, in working example 2, astigmatism on the principal meridian is smaller and the distinct width is wider than those in comparative example 2.

Similarly, in comparison among working example 3, comparative example 3, and reference example 2, in working example 3, astigmatism on the principal meridian is smaller and the distinct width is wider than those in comparative example 3 and reference example 2.

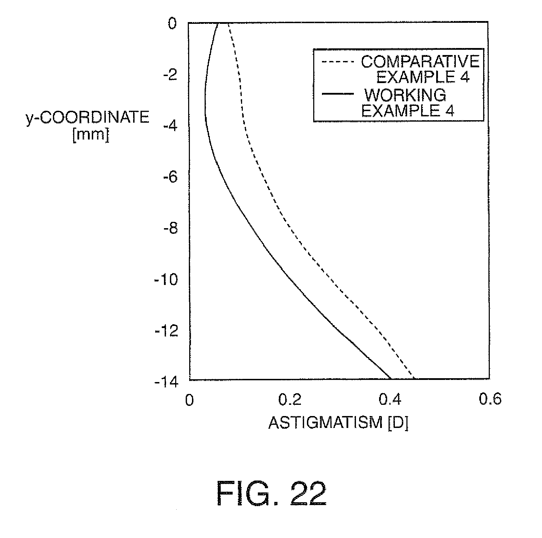

Regarding working example 4 and comparative example 4, simulations of astigmatism on principal meridians at wearing of lenses are performed. Results of the simulations are shown in Table 8 and Fig. 22.

In Table 8, values of astigmatism on the principal meridians are shown according to "0" to "-14" of y-coordinates, and their graph is shown in Fig. 22. Note that "0" of y-coordinate is the fitting point.

As shown in Table 8 and Fig. 22, it is known that astigmatism is smaller in working example 4 than that in comparative example 4 in any point on y-coordinates.

Table 8

| y-coordinate | Astigmatism on principal meridian | |
|---|---|---|
| | Working example 4 | Comparative example 4 |
| 0 | 0.057 | 0.079 |
| -2 | 0.035 | 0.099 |
| -4 | 0.034 | 0.109 |
| -6 | 0.066 | 0.144 |
| -8 | 0.121 | 0.199 |
| -10 | 0.196 | 0.276 |
| -12 | 0.294 | 0.372 |
| -14 | 0.404 | 0.451 |

Note that the invention is not limited to the above described embodiments, and it is obvious that the invention contains modifications and improvements within the range in which the purpose and effects of the invention can be achieved.

For example, in order to accommodate an astigmatic prescribed lens, astigmatic components such as toric surface components may be combined on both or one of the object side progressive surface and the eyeball side progressive surface using a known method. Further, in order to improve the astigmatism and power error generated outside of the fitting pint, coordinates of the rotationally symmetric aspheric surface may be combined on both or one of the object side progressive surface and the eyeball side progressive surface using a known method. Furthermore, the aberration, power error, and prism error generated near the fitting point due to the influence of the prism description, forward tilt angle at wearing, or face form may be corrected using a known method.

The invention may be used for a progressive power eyeglass lens having progressive surfaces on both surfaces.

**Claims**

1. A progressive power eyeglass lens comprising:

   an object side surface that includes a first progressive surface;
   an eyeball side surface that includes a second progressive surface; **characterizing in that**:

   a pair of points that is passed by a light beam passing through a rotation center of an eyeball of an eyeglasses wearer, the pair of points including:

   a first point that exists on a principal meridian on the eyeball side surface between a progressive start point to a progressive end point, and
   a second point that exists on a principal meridian on the object side surface.

2. The progressive power eyeglass lens according to claim 1, wherein,
   given that surface refractive power of a distance portion is Df, surface refractive power of an arbitrary point on the principal meridian is Dm, and addition of a surface is ADD, and an addition change rate R on the principal meridian is expressed by the following equation

$$R = (Dm - Df)/ADD$$

   the addition change rate of the first point and the addition change rate of the second point are equal.

3. The progressive power eyeglass lens according to one of claims 1 or 2, wherein,
   the first point is the progressive start point on the eyeball side surface, and
   the second point is a progressive start point on the object side surface.

4. The progressive power eyeglass lens according to one of claims 1 or 2, wherein,
   the first point is the progressive end point on the eyeball side surface, and
   the second point is a progressive end point on the object side surface.

5. The progressive power eyeglass lens according to one of claims 1 to 4, wherein,
   a second pair of points that is passed by a second light beam passing through a second optical path different from a first optical path passed through the light beam, the second pair of points including:

   a third point that exists on the principal meridian on the eyeball side surface and that is the progressive end point on the eyeball side surface, and
   a fourth point that exists on the principal meridian on the object side surface and that is the progressive end point on the object side surface, wherein,

   the first point is the progressive start point on the eyeball side surface, and
   the second point is a progressive start point on the object side surface.

6. A method of designing a progressive power eyeglass lens, comprising:

   ray-tracing of computing a light beam entering an object side surface of the progressive power eyeglass lens, outputting from an eyeball side surface of the progressive power eyeglass lens, and passing through a rotation center of an eyeball of an eyeglasses wearer, the object side surface including a first progressive surface and the eyeball side surface including a second progressive surface; **characterizing in**:

computing an first point and a second point using the ray tracing, the first point existing on a principal meridian on the eyeball side surface between a progressive start point to a progressive end point and the second point existing on a principal meridian on the object side surface.

7. The method of designing the progressive power eyeglass lens according to claim 6, wherein
the ray-tracing of computing the light beam uses an actually measured distance from the rotation center of the eyeball to the eyeball side surface.

8. The method of designing the progressive power eyeglass lens according to one of claims 6 or 7, wherein
the ray-tracing of computing the light beam uses an actually measured forward tilt angle at wearing.

9. The method of designing the progressive power eyeglass lens according to one of claims 6 to 8, wherein
the ray-tracing of computing the light beam uses an actually measured face form.

FIG. 1A

FIG. 1B

FIG. 2A

FIG. 2B

FIG. 3

FIG. 4A

FIG. 4B

FIG. 5

FIG. 6

FIG. 7

FIG. 8

FIG. 9

FIG. 10A

FIG. 10B

FIG. 11A

FIG. 11B

**FIG. 12A**

**FIG. 12B**

FIG. 13A

FIG. 13B

FIG. 14A

FIG. 14B

FIG. 15A

FIG. 15B

FIG. 16A

FIG. 16B

FIG. 17A

FIG. 17B

EP 2 402 815 A1

FIG. 18A

FIG. 18B

FIG. 19A

FIG. 19B

FIG. 20A

FIG. 20B

FIG. 21A

FIG. 21B

FIG. 22

FIG. 23

FIG. 24

FIG. 25A

FIG. 25B

FIG. 26A

FIG. 26B

FIG. 27A

FIG. 27B

FIG. 27C

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 990 676 A2 (HOYA CORP [JP]) 12 November 2008 (2008-11-12) * paragraph [0048] - paragraph [0074]; figures 1-14; examples 1-7 * ----- | 1-9 | INV. G02C7/02 |
| X | US 6 123 422 A (MENEZES EDGAR V [US] ET AL) 26 September 2000 (2000-09-26) * column 2, line 5 - column 7, line 26; figures 1a-5c * ----- | 1-9 | |
| X | EP 0 809 127 A1 (SEIKO EPSON CORP [JP]) 26 November 1997 (1997-11-26) | 1-5 | |
| A | * page 7, line 11 - page 14, line 16; figures 1-12 * ----- | 6-9 | |

TECHNICAL FIELDS
SEARCHED (IPC)

G02C

The present search report has been drawn up for all claims

| Place of search | Date of completion of the search | Examiner |
|---|---|---|
| Munich | 26 September 2011 | Bratfisch, Knut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 1459

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2011

| Patent document cited in search report | | Publication date | Patent family member(s) | | Publication date |
|---|---|---|---|---|---|
| EP 1990676 | A2 | 12-11-2008 | AT | 414930 T | 15-12-2008 |
| | | | AU | 2003235418 A1 | 12-12-2003 |
| | | | CN | 1656410 A | 17-08-2005 |
| | | | EP | 1510852 A1 | 02-03-2005 |
| | | | ES | 2316803 T3 | 16-04-2009 |
| | | | HK | 1080949 A1 | 18-09-2009 |
| | | | WO | 03100505 A1 | 04-12-2003 |
| | | | US | 2004233385 A1 | 25-11-2004 |
| US 6123422 | A | 26-09-2000 | AT | 229657 T | 15-12-2002 |
| | | | AU | 754265 B2 | 07-11-2002 |
| | | | AU | 5602899 A | 04-05-2000 |
| | | | BR | 9905589 A | 29-08-2000 |
| | | | CA | 2287058 A1 | 23-04-2000 |
| | | | CN | 1254850 A | 31-05-2000 |
| | | | DE | 69904423 D1 | 23-01-2003 |
| | | | DE | 69904423 T2 | 17-04-2003 |
| | | | EP | 0996023 A2 | 26-04-2000 |
| | | | IL | 132467 A | 25-07-2002 |
| | | | JP | 2000155294 A | 06-06-2000 |
| | | | JP | 2010237710 A | 21-10-2010 |
| | | | KR | 20000029253 A | 25-05-2000 |
| | | | RU | 2231996 C2 | 10-07-2004 |
| | | | SG | 83750 A1 | 16-10-2001 |
| | | | TW | 470854 B | 01-01-2002 |
| | | | US | 6149271 A | 21-11-2000 |
| EP 0809127 | A1 | 26-11-1997 | WO | 9719383 A1 | 29-05-1997 |
| | | | JP | 3800629 B2 | 26-07-2006 |
| | | | US | 5926250 A | 20-07-1999 |

EPO FORM P0459

For more details about this annex : see Official Journal of the European Patent Office, No. 12/82

**REFERENCES CITED IN THE DESCRIPTION**

**Patent documents cited in the description**

- JP 3800629 B
- JP 4239519 B
- JP 2000155294 A